# EUROPÄISCHE PATENTSCHRIFT

(11) **EP 3 296 009 B1**
(45) Veröffentlichungstag und Bekanntmachung des Hinweises auf die Patenterteilung: **27.03.2019**
(21) Anmeldenummer: 16189565.1
(22) Anmeldetag: 20.09.2016
(51) Int. Cl.: B01D 53/94, B01J 23/44, B01J 23/648, B01J 29/76, B01J 35/04, F01N 3/20, F01N 3/035

(54) **PARTIKELFILTER MIT SCR-AKTIVER BESCHICHTUNG**
PARTICLE FILTER WITH SCR ACTIVE COATING
FILTRE À PARTICULES AVEC REVÊTEMENT ACTIVE À RÉDUCTION CATALYTIQUE SÉLECTIVE

(43) Veröffentlichungstag der Anmeldung: 21.03.2018
(73) Patentinhaber: Umicore AG & Co. KG, 63457 Hanau-Wolfgang (DE)
(72) Erfinder: Schuler, Anke, 63843 Niedernberg (DE); Dornhaus, Franz, Higashinada-ku, Kobe, 658-0063 (JP)

(56) Entgegenhaltungen:
- EP-A1- 0 174 495
- EP-A1- 1 493 484
- EP-A1- 1 916 029
- US-A1- 2010 034 717
- US-A1- 2011 078 997
- US-A1- 2011 126 525
- US-A1- 2013 216 441
- US-A1- 2016 053 644
- WENPO SHAN ET AL: "The use of ceria for the selective catalytic reduction of NOx with NH3", CHINESE JOURNAL OF CATALYSIS / DALIAN INSTITUTE OF CHEMICAL PHYSICS, Bd. 35, Nr. 8, 1. August 2014 (2014-08-01) , Seiten 1251-1259, XP055350899, AMSTERDAM, NL ISSN: 1872-2067, DOI: 10.1016/S1872-2067(14)60155-8

## Beschreibung

Die vorliegende Erfindung betrifft ein Partikelfilter mit SCR-aktiver Beschichtung zur gleichzeitigen Verminderung von Partikeln und Stickoxiden im Abgas von Verbrennungsmotoren.

Abgase von Kraftfahrzeugen mit einem überwiegend mager betriebenen Verbrennungsmotor enthalten neben Partikelemissionen insbesondere die Primäremissionen Kohlenmonoxid CO, Kohlenwasserstoffe HC und Stickoxide NOx. Aufgrund des relativ hohen Sauerstoffgehaltes von bis zu 15 Vol.-% können Kohlenmonoxid und Kohlenwasserstoffe durch Oxidation relativ leicht unschädlich gemacht werden, die Reduktion der Stickoxide zu Stickstoff gestaltet sich jedoch wesentlich schwieriger.

Ein bekanntes Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt.
Das als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Partikel bestehen hauptsächlich aus Kohlenstoff und können sehr effektiv mit Hilfe von Partikelfiltern aus dem Abgas entfernt werden. Besonders bewährt haben sich Wandflussfilter aus keramischen Materialien. Diese sind aus einer Vielzahl von parallelen Kanälen aufgebaut, die durch poröse Wände gebildet werden. Die Kanäle sind wechselseitig an einem der beiden Enden des Filters gasdicht verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten.

Vom Filter zurückgehaltene Partikel müssen von Zeit zu Zeit oder kontinuierlich entfernt werden, um einen zu hohen Gegendruck des Filters oder sogar dessen Verstopfen zu vermeiden. Dies geschieht insbesondere durch Abbrennen des Kohlenstoffs mit Sauerstoff bei erhöhten Temperaturen von ca. 600°C.
Es ist auch bereits bekannt, Wandflussfilter mit SCR-aktivem Material zu beschichten und so Partikel und Stickoxide gleichzeitig aus dem Abgas zu entfernen.
Sofern die erforderliche Menge an SCR-aktivem Material auf die porösen Wände zwischen den Kanälen aufgebracht wird (sogenannte auf-Wand-Beschichtung), kann dies allerdings zu einer inakzeptablen Erhöhung des Gegendrucks des Filters führen.
Vor diesem Hintergrund schlagen beispielsweise die JPH01-151706 und die WO2005/016497 A1 vor, einen Wandflussfilter dergestalt mit einem SCR-Katalysator zu beschichten, dass letzterer die porösen Wände durchdringt (sogenannte in-Wand-Beschichtung).

Die Dokumente US2013/216441 A1 und US2011/078997 A1 offenbaren Wandflussfilter mit einer in-Wand Beschichtung eines SCR Katalysators und einer Pd haltigen Beschichtung auf der Oberfläche der Austrittskanäle.

Wichtige Anforderungen an die Kombination eines Partikelfilters mit einem SCR-Katalysator sind insbesondere die Tieftemperatur-Aktivität für den normalen Fahrbetrieb, sowie die Aktivität hinsichtlich NOx-Umsatz, wie auch die Minimierung der CO- und HC-Sekundäremissionen während der Filterregeneration. Darüber hinaus sollte ein SCR-Katalysator eine möglichst hohe Selektivität aufweisen, d.h. er sollte möglichst wenig Distickstoffmonoxid bilden.

Die Aufgabe der vorliegenden Erfindung besteht darin, mit SCR-Katalysatoren beschichtete Wandflussfilter zur Verfügung zu stellen, die die genannten Anforderungen erfüllen.

Die vorliegende Erfindung betrifft ein Partikelfilter, das ein Wandflussfilter und SCR-aktives Material umfasst, wobei
das Wandflussfilter Kanäle umfasst, die sich parallel zwischen einem ersten und einem zweiten Ende des Wandflussfilters erstrecken, die abwechselnd entweder am ersten oder am zweiten Ende gasdicht verschlossen sind und die durch poröse Wände getrennt sind, und wobei
das SCR-aktive Material einen Zeolithen enthält, der mit Kupfer und/oder Eisen ausgetauscht ist und sich in Form einer Beschichtung in den porösen Wänden des Wandflussfilters befindet,
dadurch gekennzeichnet, dass das SCR-aktive Material Palladium enthält.

In einer Ausführungsform der vorliegenden Erfindung ist das Palladium homogen im SCR-aktiven Material verteilt.

In einer weiteren Ausführungsform der vorliegenden Erfindung liegt das Palladium auf einem Trägermaterial geträgert vor.
Als Trägermaterialien für das Palladium kommen alle dem Fachmann für diesen Zweck geläufigen Materialien in Betracht. Solche Materialien weisen eine BET-Oberfläche von 30 bis 250 m²/g, bevorzugt von 100 bis 200 m²/g auf (bestimmt nach DIN 66132) und sind insbesondere Aluminiumoxid, Siliziumoxid, Magnesiumoxid, Titanoxid, sowie Mischungen oder Mischoxide davon.
Bevorzugt sind Aluminiumoxid und Aluminium/Silizium-Mischoxide. Sofern Aluminiumoxid verwendet wird, so ist es besonders bevorzugt stabilisiert, beispielsweise mit Lanthanoxid.
Die Belegung des Trägermaterials mit Palladium erfolgt nach bekannten Verfahren, beispielsweise nach dem "incipient-wetness"-Verfahren oder einem Injektionsverfahren, jeweils unter Verwendung wasserlöslicher Palladium-Verbindungen.

In Ausführungsformen der vorliegenden Erfindung kann aber auch das SCR-aktive Material als Träger für das Palladium dienen. Das Palladium liegt in diesem Fall also direkt auf dem SCR-aktiven Material vor.
Es ist darüber hinaus auch denkbar, dass ein Teil des Palladiums direkt auf dem SCR-aktiven Material und ein anderer Teil auf einem gesonderten Trägermaterial geträgert ist.
In Ausführungsformen der vorliegenden Erfindung enthält die SCR-aktive Beschichtung Palladium in Mengen von 10 bis 1000 ppm, bevorzugt 50 bis 500 ppm, jeweils bezogen auf das SCR-aktive Material.
Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit.
Sie weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.
In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters. Unter dem Begriff SCR-aktives Material werden im Rahmen der vorliegenden Erfindung Materialien verstanden, die einen SCR-Katalysator und Palladium enthalten oder die aus einem SCR-Katalysator und Palladium bestehen.
In Ausführungsformen der vorliegenden Erfindung werden als SCR-Katalysatoren insbesondere kleinporige Zeolithe verwendet, die mit Kupfer und/oder Eisen ausgetauscht sind.
Kleinporige Zeolithe weisen eine maximale Ringgröße von acht tetraedrische angeordneten Atomen auf und sind insbesondere solche, die den

Strukturtypen AEI, CHA (Chabazit), ERI (Erionit), LEV (Levyne) und KFI angehören. Besonders bevorzugt sind die Strukturtypen Chabazit und Levyne.

Im Rahmen der vorliegenden Erfindung fallen unter den Begriff Zeolith nicht nur Aluminosilikate, sondern auch Silicoaluminophosphate, die gelegentlich auch als Zeolith-ähnliche Verbindungen bezeichnet werden. Silicoaluminophosphate zur erfindungsgemäßen Verwendung gehören insbesondere ebenfalls den Strukturtypen AEI, CHA (Chabazit), ERI (Erionit), LEV (Levyne) und KFI an. Beispiele sind SAPO-34 und SAPO-35.

Die genannten Zeolithe sind mit Eisen und/oder Kupfer, insbesondere mit Kupfer ausgetauscht. Die Eisen- bzw. Kupfermengen betragen insbesondere 0,2 bis 6 Gew.-%, berechnet als Fe₂O₃ bzw. CuO und bezogen auf das Gesamtgewicht des ausgetauschten Zeolithen.

In Ausführungsformen der vorliegenden Erfindung umfasst das SCR-aktive Material einen SCR-Katalysator, der einen Kupfer-ausgetauschten Zeolithen enthält, sowie Palladium oder es besteht aus einem Kupfer-ausgetauschten Zeolithen und Palladium.

In Ausführungsformen der vorliegenden Erfindung umfasst das SCR-katalytisch aktive Material einen mit Kupfer ausgetauschten Zeolithen vom Chabazit-Typ, sowie Palladium oder es besteht aus einem Kupfer-ausgetauschten Zeolithen vom Chabazit-Typ und Palladium und/oder auf einem Trägermaterial geträgerten Palladium.

In anderen Ausführungsformen der vorliegenden Erfindung umfasst das SCR-katalytisch aktive Material einen mit Kupfer ausgetauschten Zeolithen vom Levyne-Typ, sowie Palladium oder es besteht aus einem Kupfer-ausgetauschten Zeolithen vom Levyne-Typ und Palladium und/oder auf einem Trägermaterial geträgerten Palladium.

In einer weiteren Ausführungsform der vorliegenden Erfindung beträgt die Menge der Beschichtung mit SCR-aktivem Material 70 bis 150, insbesondere 90 bis 130 g/L, bezogen auf das Volumen des Wandfluss-filters.
Die Herstellung des erfindungsgemäßen Partikelfilters kann nach dem Fachmann geläufigen Methoden erfolgen, so etwa nach den üblichen Tauchbeschichtungsverfahren bzw. Pump- und Saug-Beschichtungsverfahren mit sich anschließender thermischer Nachbehandlung bzw. Kalzination. Dem Fachmann ist bekannt, dass die durchschnittliche Porengröße des Wandflussfilters und die mittlere Teilchengröße der SCR-katalytisch aktiven Materialien aufeinander abgestimmt werden müssen, um eine aufWand-beschichtung oder eine in-Wand-Beschichtung zu erzielen. Erfindungsgemäß liegt eine in-Wand-Beschichtung, das heißt eine Beschichtung der inneren Porenoberflächen der porösen Wände vor. In diesem Fall muss die mittlere Teilchengröße der SCR-katalytisch aktiven Materialien klein genug sein, um in die Poren des Wandflussfilters einzudringen.
Die Erfindung wird in den nachstehenden Beispielen und Figuren näher erläutert.

### Beispiel 1

Ein handelsüblicher Zeolith des Strukturtyps Chabazit wurde mittels Kupferacetat mit Kupfer ausgetauscht, so dass der Kupfergehalt 3,5 Gew.-%, bezogen auf CuO war. Die erhaltene Suspension wurde mit Palladium, geträgert auf einem handelsüblichen Trägermaterial aus mit Siliziumdioxid dotiertem Aluminiumoxid, versetzt. Dabei wurde die Menge so berechnet, dass der Gehalt an Palladium 200ppm, bezogen auf den Gesamtfeststoff der Suspension, betrug.
Mit der resultierenden Suspension wurde ein handelsüblicher Wandflussfilter aus Siliziumkarbid "in-Wand" beschichtet.
Das so erhaltene SCR-aktiv beschichtete Wandflussfilter wird nachfolgend als C1 bezeichnet.

### Vergleichsbeispiel 1

Beispiel 1 wurde wiederholt mit dem Unterschied, dass die Suspension nicht mit Palladium versetzt wurde.
Das so erhaltene SCR-aktiv beschichtete Wandflussfilter wird nachfolgend als VC1 bezeichnet.

### Vergleichsbeispiel 2

Beispiel 1 wurde wiederholt mit dem Unterschied, dass die Suspension nicht mit geträgertem Palladium, sondern mit 200ppm geträgertem Platin versetzt wurde.
Das so erhaltene SCR-aktiv beschichtete Wandflussfilter wird nachfolgend als VC2 bezeichnet.

### Vergleichsexperimente

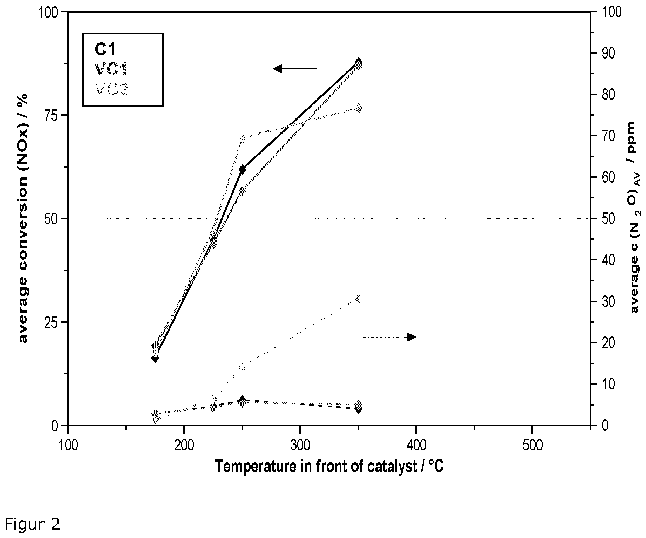

Bestimmung der NOx-Konvertierung von C1, VC1 und VC2
a) Zunächst wurden C1, VC1 und VC2 16 Stunden bei 800°C in hydrothermaler Atmosphäre gealtert (10% H₂O, 10% O₂, Rest N₂) (zum Vergleich wurden auch frische Katalysatoren C1, VC1 Und VC2 verglichen, siehe Figur 2)
b) Die NOx-Konvertierung des erfindungsgemäßen Partikelfilters C1 und der Vergleichspartikelfilter VC1 und VC2 in Abhängigkeit von der Temperatur vor dem Katalysator wurde in einem Modellgasreaktor im sog. NOx-Umsatztest bestimmt.
Der NOx-Umsatztest besteht aus einer Testprozedur, die eine Vorbehandlung und einem Testzyklus umfasst, der für verschiedene Zieltemperaturen durchlaufen wird. Die applizierten Gasmischungen sind in Tabelle 1 vermerkt.

### Testprozedur:

1. Vorkonditionierung bei 600°C unter N₂ für 10min
2. Testzyklus, der für die Zieltemperaturen wiederholt wird
   a. Anfahren der Zieltemperatur unter Gasmischung 1
   b. Zuschalten von NOₓ (Gasmischung 2)
   c. Zuschalten von NH₃ (Gasmischung 3), warten bis NH₃-Durchbruch > 20ppm, bzw. maximal 30min Dauer
   d. Temperatur-Programmierte Desorption bis 500°C (Gasmischung 3)

**Tabelle 1:**

| Gasmischungen des NOx-Umsatztests. | | | |
|---|---|---|---|
| Gasmischung | 1 | 2 | 3 |
| N₂ | Balance | Balance | Balance |
| O₂ | 10 Vol.-% | 10 Vol.-% | 10 Vol.-% |
| NOx | 0 ppm | 500 ppm | 500 ppm |
| NO₂ | 0 ppm | 0 ppm | 0 ppm |
| NH₃ | 0 ppm | 0 ppm | 750 ppm |
| CO | 350 ppm | 350 ppm | 350 ppm |
| C₃H₆ | 100 ppm | 100 ppm | 100 ppm |
| H₂O | 5 Vol.-% | 5 Vol.-% | 5 Vol.-% |
| GHSV / h-1 | 60.000 | 60.000 | 60.000 |

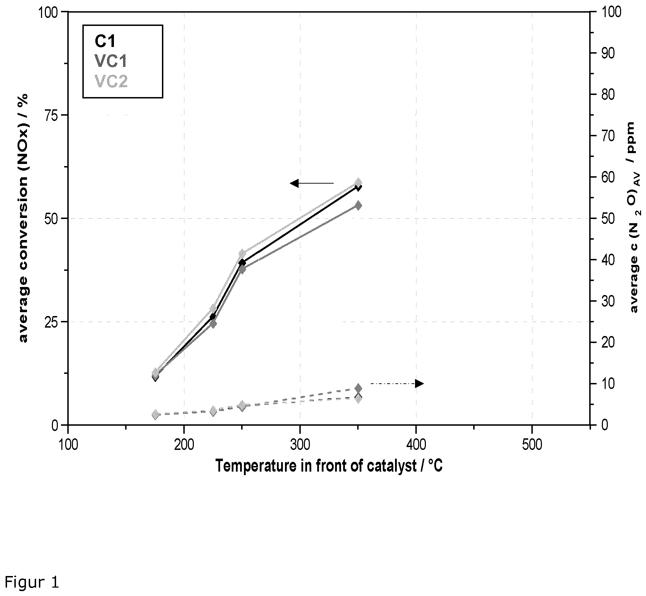

Für jeden Temperaturpunkt wird der gemittelte Umsatz für den Testprozedur-Bereich 2c bestimmt. Aus der Auftragung des gemittelten NOx-Umsatzes für die verschiedenen Temperaturpunkte ergibt sich eine Auftragung wie in den Figuren 1 und 2 gezeigt. In Figur 1 sind die gemittelten NOx-Umsätze und die N₂O Bildung der bei 800°C gealterten Katalysatoren dargestellt und in Figur 2 die Ergebnisse der frischen Katalysatorproben.

Aus den Figuren 1 und 2 ergibt sich, dass C1 und VC2 im Vergleich zu VC1 deutlich verbesserte durchschnittliche NOx-Umsätze aufweisen. Dies ist auf die Anwesenheit von Palladium bzw. Platin zurückzuführen.
Im Vergleich zu VC2 bildet C1 aber wesentlich weniger N₂O, weist also eine gleichbleibend bessere Selektivität auf.

## Patentansprüche

1. Partikelfilter, das ein Wandflussfilter und SCR-aktives Material umfasst, wobei
das Wandflussfilter Kanäle umfasst, die sich parallel zwischen einem ersten und einem zweiten Ende des Wandflussfilters erstrecken, die abwechselnd entweder am ersten oder am zweiten Ende gasdicht verschlossen sind und die durch poröse Wände getrennt sind, und wobei
das SCR-aktive Material einen Zeolithen enthält, der mit Kupfer und/oder Eisen ausgetauscht ist und sich in Form einer Beschichtung in den porösen Wänden des Wandflussfilters befindet,
**dadurch gekennzeichnet, dass** das SCR-katalytisch aktive Material Palladium enthält.

2. Partikelfilter gemäß Anspruch 1, **dadurch gekennzeichnet, dass** das Palladium homogen im SCR-aktiven Material verteilt ist.

3. Partikelfilter gemäß Anspruch 1 und/oder 2, **dadurch gekennzeichnet, dass** das Palladium auf einem Trägermaterial geträgert vorliegt.

4. Partikelfilter gemäß Anspruch 3, **dadurch gekennzeichnet, dass** das Trägermaterial eine BET-Oberfläche von 30 bis 250 m²/g (bestimmt nach DIN 66132) aufweist.

5. Partikelfilter gemäß Anspruch 4, **dadurch gekennzeichnet, dass** das Trägermaterial Aluminiumoxid, Siliziumoxid, Magnesiumoxid, Titanoxid, oder eine Mischungen oder ein Mischoxide aus mindestens zwei dieser Oxide ist.

6. Partikelfilter gemäß einem oder mehreren der Ansprüche 1 bis 5, **dadurch gekennzeichnet, dass** die SCR-katalytisch aktive Beschichtung Palladium in Mengen von 10 bis 1000 ppm enthält.

7. Partikelfilter gemäß einem oder mehreren der Ansprüche 1 bis 6, **dadurch gekennzeichnet, dass** als Zeolith ein kleinporiger Zeolith verwendet wird.

8. Partikelfilter gemäß Anspruch 7, **dadurch gekennzeichnet, dass** der kleinporige Zeolith einem der Strukturtypen AEI, CHA (Chabazit), ERI (Erionit), LEV (Levyne) und KFI angehört.

9. Partikelfilter gemäß Anspruch 8 **dadurch gekennzeichnet, dass** das SCR-aktive Material einen Kupfer ausgetauschten Zeolithen vom Chabazit-Typ und Palladium enthält oder aus einem Kupfer-ausgetauschten Zeolithen vom Chabazit-Typ und Palladium und/oder auf einem Trägermaterial geträgertem Palladium besteht.

10. Partikelfilter gemäß Anspruch 8 **dadurch gekennzeichnet, dass** das SCR-aktive Material einen Kupfer ausgetauschten Zeolithen vom Levyne-Typ und Palladium enthält oder aus einem Kupfer-ausgetauschten Zeolithen vom Levyne-Typ und Palladium und/oder auf einem Trägermaterial geträgertem Palladium besteht.

## Claims

1. A particle filter comprising a wall-flow filter and SCR-active material,
wherein
the wall-flow filter comprises channels which extend parallelly between a first and a second end of the wall-flow filter, which are alternatingly sealed in a gas-tight manner either at the first or at the second end, and which are separated by porous walls, and wherein
the SCR active material comprises a zeolite which is exchanged with copper and/or with iron and is present in the form of a coating in the porous walls of the wall-flow filter,
**characterized in that** the SCR-catalytically active material contains palladium.

2. The particle filter according to claim 1, **characterized in that** the palladium is homogeneously distributed in the SCR-active material.

3. The particle filter according to claim 1 and/or 2, **characterized in that** the palladium is present supported on a carrier material.

4. The particle filter according to claim 3, **characterized in that** the carrier material comprises a BET surface area of 30 to 250 m²/g of (determined in accordance with DIN 66132).

5. The particle filter according to claim 4, **characterized in that** the carrier material is aluminum oxide, silicon oxide, magnesium oxide, titanium oxide, or a mixture or a mixed oxide comprising at least two of these oxides.

6. The particle filter according to any one of claims 1 to 5, **characterized in that** the SCR-catalytically active coating contains palladium in amounts of 10 to 1000 ppm.

7. The particle filter according to any one of claims 1 to 6, **characterized in that** a small-pore zeolite is used as zeolite.

8. The particle filter according to claim 7, **characterized in that** the small-pore zeolite belongs to one of the structure types AEI, CHA (chabazite), ERI (erionite), LEV (levyne), and KFI.

9. The particle filter according to claim 8, **characterized in that** the SCR-active material comprises a copper-exchanged chabazite-type zeolite and palladium, or consists of a copper-exchanged zeolite of the chabazite type and palladium and/or palladium supported on a carrier material.

10. The particle filter according to claim 8, **characterized in that** the SCR-active material comprises a copper-exchanged levyne-type zeolite and palladium, or consists of a copper-exchanged levyne-type zeolite and palladium and/or palladium supported on a carrier material.

## Revendications

1. Filtre à particules, qui comprend un filtre à parois filtrantes et un matériau actif en réduction catalytique sélective (SCR),
le filtre à parois filtrantes comprenant des canaux qui s'étendent parallèlement entre une première et une deuxième extrémité du filtre à parois filtrantes, qui sont fermés de manière étanche aux gaz alternativement, soit à la première, soit à la deuxième extrémité et qui sont séparés par des parois poreuses et
le matériau actif en SCR contenant une zéolithe, qui est échangée au cuivre et/ou au fer et qui se trouve sous forme d'un revêtement dans les parois poreuses du filtre à parois filtrantes,
**caractérisé en ce que** le matériau catalytiquement actif en SCR contient du palladium.

2. Filtre à particules selon la revendication 1, **caractérisé en ce que** le palladium est réparti de manière homogène dans le matériau actif en SCR.

3. Filtre à particules selon la revendication 1 et/ou 2, **caractérisé en ce que** le palladium se trouve sous forme supportée sur un matériau support.

4. Filtre à particules selon la revendication 3, **caractérisé en ce que** le matériau support présente une surface BET de 30 à 250 m²/g (déterminée selon la norme DIN 66132).

5. Filtre à particules selon la revendication 4, **caractérisé en ce que** le matériau support est de l'oxyde d'aluminium, de l'oxyde de silicium, de l'oxyde de magnésium, de l'oxyde de titane ou un mélange ou un oxyde mixte d'au moins deux de ces oxydes.

6. Filtre à particules selon l'une quelconque des revendications 1 à 5, **caractérisé en ce que** le revêtement catalytiquement actif en SCR contient du palladium en des quantités de 10 à 1000 ppm.

7. Filtre à particules selon l'une quelconque des revendications 1 à 6, **caractérisé en ce qu'**une zéolithe à petits pores est utilisée comme zéolithe.

8. Filtre à particules selon la revendication 7, **caractérisé en ce que** la zéolithe à petits pores appartient à un des types de structure AEI, CHA (chabasite), ERI (érionite), LEV (levynite) et KFI.

9. Filtre à particules selon la revendication 8, **caractérisé en ce que** le matériau actif en SCR contient une zéolithe échangée au cuivre de type chabasite et du palladium ou est constitué par une zéolithe échangée au cuivre de type chabasite et du palladium et/ou du palladium supporté sur un matériau support.

10. Filtre à particules selon la revendication 8, **caractérisé en ce que** le matériau actif en SCR contient une zéolithe échangée au cuivre de type levynite et du palladium ou est constitué par une zéolithe échangée au cuivre de type levynite et du palladium et/ou du palladium supporté sur un matériau support.
